# EUROPÄISCHE PATENTSCHRIFT

(11) **EP 2 291 260 B1**
(45) Veröffentlichungstag und Bekanntmachung des Hinweises auf die Patenterteilung: **04.04.2018**
(21) Anmeldenummer: 09769165.3
(22) Anmeldetag: 17.06.2009
(51) Int. Cl.: B23K 26/34, B22F 3/105

(54) **PROZESSKAMMER FÜR DAS SELEKTIVE LASERSCHMELZEN UND DEREN VERWENDUNG ZUM ERZEUGEN EINES BAUTEILS**
PROCESS CHAMBER FOR SELECTIVE LASER SINTERING AND USE THEREOF FOR MAKING A PIECE
ENCEINTE POUR LE FRITTAGE SÉLECTIF AU LASER ET UTILISATION ASSOCIÉE POUR PRODUIRE UNE PIÈCE

(30) Priorität: 26.06.2008 DE 102008030186
(43) Veröffentlichungstag der Anmeldung: 09.03.2011
(73) Patentinhaber: Siemens Aktiengesellschaft, 80333 München (DE)
(72) Erfinder: DOYE, Christian, 13156 Berlin (DE); PYRITZ, Sven, 10627 Berlin (DE); PYRITZ, Uwe, 13599 Berlin (DE); SCHÄFER, Martin, 10557 Berlin (DE)
(86) Internationale Anmeldenummer: PCT/EP2009/057514
(87) Internationale Veröffentlichungsnummer: WO 2009/156316

(56) Entgegenhaltungen:
- EP-A2- 0 416 852
- DE-C1- 4 319 000
- DE-C1- 19 853 947

## Beschreibung

Die Erfindung betrifft eine Prozesskammer für das selektive Laserschmelzen. Diese weist einen hermetisch gegen die Umgebung abgeschlossenen Prozessraum mit einer Aufnahmeplatte für die Herstellung eines Bauteils auf. Dieser Prozessraum besitzt außerdem einen Einlass und einen Auslass für ein Inertgas, welches ungewünschte Reaktionen des Schmelzbades vermeiden soll. Alternativ kann der Auslass auch für eine Evakuierung des Prozessraumes dienen.
Eine derartige Prozesskammer ist beispielsweise in der DE 198 53 947 C1 beschrieben. Diese Prozesskammer weist die genannten Merkmale auf, wobei als Inertgas durch den Einlass und den Auslass Argon gepumpt wird. Weiterhin weist die Prozesskammer im Bereich eines Fensters für den Laserstrahl weitere Einlässe auf, durch die Helium in die Prozesskammer eingeblasen werden kann. Dieses verdrängt im Bereich des Fensters das Argon sowie evtl. in diesem befindliche Dämpfe des aufgeschmolzenen Werkstoffpulvers, die dieses Fenster verschmutzen würden.
Aus der DE 43 19 000 C1 ist es bekannt, dass Bauteile auch durch schichtweises Auftragsschweißen hergestellt werden können. Hierbei ist es möglich, dass dem Prozess ein reaktives Gas zugeführt wird, welches in den flüssigen Werkstoff des Schweißbades eingebaut wird.
Die Aufgabe der Erfindung liegt in der Bereitstellung einer Prozesskammer, mit der ein optimaler Wirkungsgrad eines zum Einsatz kommenden Reaktivgases ermöglicht wird. Diese Aufgabe wird erfindungsgemäß durch die Prozesskammer nach Anspruch 1 und deren Verwendung nach Anspruch 2 gelöst.

Erfindungsgemäß ist daher vorgesehen, dass zusätzlich zu dem Einlass und dem Auslass eine Zuführung für ein Reaktivgas vorgesehen ist. Im Unterschied zu den Zuführungen gemäß der DE 198 53 947 C1 ist an die Zuführung also ein Behälter angeschlossen, der ein Reaktivgas und kein Inertgas enthält. Die Zuführung muss außerdem so erfolgen, dass das Reaktivgas nicht das Inertgas im Bereich des Fensters verdrängt, sondern im Bereich der gerade erzeugten Bauteiloberfläche. Dies kann damit begründet werden, dass eine Reaktion mit dem Reaktivgas im Augenblick der Herstellung der Schichtbereiche sogar gewünscht ist und daher entgegen des mit dem Inertgas verfolgten Zieles liegt, eine Reaktion des Werkstoffes des Bauteiles zu verhindern. Durch den zusätzlichen Einlass ist es aber möglich, den Prozessverlauf zu optimieren, da ein ständiges vollständiges Auswechseln des Inertgases und des Reaktivgases nicht notwendig ist. Vielmehr wird für die Zeiträume der Herstellung der Schichtbereiche das Reaktivgas so in die Reaktionskammer eingespeist, dass eine Reaktion an der Oberfläche erfolgen kann. Sobald die Einleitung des Reaktivgases gestoppt wird, spült das Inertgas die Reaktivgasreste von der Bauteiloberfläche weg, so dass der entstehende Bauteilwerkstoff wieder vor Reaktionen geschützt wird.

Erfindungsgemäß ist vorgesehen, dass die Mündung der Zuführung in einer zur Aufnahmeplatte parallelen Ebene bewegbar ist. Hierzu muss bemerkt werden, dass die Lagen der Herstellung des Bauteils ebenfalls jeweils parallel zur Aufnahmeplatte erfolgen, da diese Lage für Lage abgesenkt wird, um eine lagenweise Herstellung des Bauteils in einer bestimmten Ebene zu ermöglichen. Wenn die Zuführung in einer kurz darüber liegenden Ebene bewegbar ist, so kann eine Einleitung des Reaktivgases weiter optimiert werden. Es ist nämlich möglich, die Reaktivgaseinleitung in die Nähe des durch den Laserstrahl erzeugten Schmelzbades zu bringen, so dass dort ein optimaler Wirkungsgrad des zum Einsatz kommenden Reaktivgases ermöglicht wird.

Die Erfindung betrifft außerdem als Verwendung der erfindungsgemäßen Prozesskammer ein Verfahren zum Erzeugen eines Bauteils durch selektives Laserschmelzen, bei dem das Bauteil durch einen Laserstrahl lagenweise aus einem Pulver durch Aufschmelzen von Werkstoffpartikeln hergestellt wird. Ein Verfahren der eingangs angegebenen Art ist beispielsweise der DE 102 23 796 C1 zu entnehmen. Es ist demnach möglich, durch selektives Laserschmelzen beispielsweise komplexe dreidimensionale Strukturen herzustellen, die eine große Oberfläche im Verhältnis zum aufgewendeten Material aufweisen. Diese Strukturen können auch als Katalysator ausgeführt werden, indem diese mittels Laserschmelzen aus dem katalytischen Material gewonnen werden. Allerdings muss bei diesem Verfahren berücksichtigt werden, dass die mechanischen Eigenschaften von Katalysatormaterialien häufig denjenigen von klassischen Konstruktionswerkstoffen unterlegen sind, so dass diese beispielsweise bei der Auslegung der Wandstärken berücksichtigt werden muss.
Gemäß der EP 416 852 A2 ist es bekannt, dass ein selektives Laserschmelzen durchgeführt werden kann, um Bauteile zu erzeugen. Hierbei kann vorgesehen werden, dass ein Gas, welches in der Prozesskammer befindlich ist, in die Zwischenräume zwischen den Pulverpartikeln eindringt und somit bei der weiteren Verarbeitung des hergestellten Bauteils, insbesondere dem nachfolgenden Sinterprozess, in dieses eingeschlossen wird. Dies wird dadurch erreicht, dass während des Sinterns die Poren im Inneren des Sinterbauteils geschlossen werden, so dass das Gas nicht mehr entweichen kann.

Aus der DE 43 19 000 C1 ist es bekannt, dass Bauteile auch durch schichtweises Auftragsschweißen hergestellt werden können. Hierbei ist es möglich, dass dem Prozess ein reaktives Gas zugeführt wird, welches in den flüssigen Werkstoff des Schweißbades eingebaut wird.

Eine Vorrichtung zum selektiven Laserschmelzen ist auch aus der DE 198 53 947 C1 bekannt. Diese Vorrichtung weist eine Prozesskammer auf, die geschlossen ist und Einlassöffnungen und Auslassöffnungen für unterschiedliche Inertgase aufweist. Diese befinden sich in den Wänden der Prozesskammer.

Die Aufgabe der Erfindung liegt daher darin, ein Verfahren zum Erzeugen eines Bauteils durch selektives Laserschmelzen anzugeben, mit dem ein optimaler Wirkungsgrad eines zum Einsatz kommenden Reaktivgases ermöglicht wird.

Diese Aufgabe wird durch das eingangs genannte Verfahren erfindungsgemäß dadurch gelöst, dass die eingangs angegebene Prozesskammer verwendet wird, wobei das selektive Laserschmelzen auch dazu eingesetzt wird, um unter Einsatz eines zeitweilig zugeführten Reaktivgases auf dem entstehenden Bauteil lokal Schichtbereiche mit einer von dem Werkstoff des Bauteils abweichenden Zusammensetzung zu erzeugen, indem das die Vorstufen des Materials des zu erzeugenden Schichtbereiches enthaltende Reaktivgas in die sich ausbildenden Schichtbereiche eingebaut wird (unter Berücksichtigung der erforderlichen Prozessparameter). Hierdurch ist es vorteilhaft möglich, durch geeignete Auswahl der Werkstoffpartikel einen Konstruktionswerkstoff vorzusehen, der eine hohe mechanische Stabilität aufweist und daher für vielfältige Anwendungen geeignet ist. Insbesondere lassen sich hierdurch beispielsweise auch filigrane dreidimensionale Strukturen mit einem Minimum an Materialaufwand erzeugen. Andererseits kann durch Auswahl eines geeigneten Reaktivgases gewährleistet werden, dass während der Herstellung des Bauteils Schichtbereiche entstehen, die besondere Funktionen des Bauteils gewährleisten können. Hierunter fallen beispielsweise Schichtbereiche aus einem katalytischen Material, so dass das Bauteil beispielsweise in der chemischen Verfahrenstechnik zur Anwendung kommen kann. Andere Anwendungen wären beispielsweise Strukturen, die zur katalytischen Luftreinigung zum Einsatz kommen (Ozonfilter).

Gemäß einer Ausgestaltung der Erfindung ist vorgesehen, dass die Schichtbereiche als letzte Lage oder letzte Lagen auf das Bauteil aufgebracht werden. Dies erfolgt derart, dass eine geschlossene Oberflächenschicht auf dem Bauteil entsteht.

Hierdurch lassen sich beispielsweise Versiegelungen von Bauteilen erzeugen, also geschlossene Oberflächenschichten, die beispielsweise einen Schutz des Bauteils bewirken können. Es ist beispielsweise die Herstellung eines Bauteils mit einer gehärteten Oberfläche denkbar, wobei als Reaktivgase Stickstoff oder Sauerstoff zugeführt werden können, die mit dem Material der metallischen Werkstoffpartikel reagieren.

Um auch Oberflächenbereiche des zu erzeugenden Bauteils mit einer Oberflächenschicht versehen zu können, die auf der dem Laserstrahl abgewandten Seite des zu erzeugenden Bauteils liegen, ist es gemäß einer anderen Ausgestaltung der Erfindung auch möglich, dass die Schichtbereiche als erste Lage oder erste Lagen auf das Bauteil aufgebracht werden, so dass sich auf dieser Seite eine geschlossene Oberflächenschicht bildet. Diese Oberflächenschicht kann dieselben Funktionen übernehmen, wie dies bereits erläutert wurde.

Die Dicke der Oberflächenschicht hängt von der Anzahl der ersten bzw. letzten erzeugten Lagen unter Einsatz des Reaktivgases ab. Die Dicke einer erzeugten Lage ist nämlich prozessbedingt durch das selektive Laserschmelzen begrenzt, so dass dickere Schichten nur durch Herstellung mehrerer Lagen erzeugt werden können.

Eine andere Ausgestaltung der Erfindung sieht vor, dass nach der Erzeugung der Schichtbereiche auf diesen weitere Lagen des Bauteils, bestehend ausschließlich aus dem Werkstoff, abgeschieden werden, wobei die Schichtbereiche eine Zwischenschicht bilden. Dies kann von Vorteil sein, wenn die Eigenschaften des erzeugten Bauteils auch von Schichtbereichen im Inneren des Bauteils abhängig sein sollen. Denkbar ist beispielsweise die Erzeugung einer Verschleißindikator-Schicht als Zwischenschicht, die eine auffällig andere Farbe als das Bauteil aufweist. Dies kann beispielsweise durch verschiedene keramische Werkstoffe erreicht werden. Der Verschleißindikator funktioniert dann so, dass eine Farbänderung der Bauteiloberfläche auffällt, sobald die über der Zwischenschicht liegenden Bereiche des Bauteils abgetragen sind. Diese Schichtbereiche können dann beispielsweise durch ein erneutes selektives Laserschmelzen auf das Bauteil wieder aufgetragen werden, um dessen Wiederverwendung zu ermöglichen.

Eine besondere Ausgestaltung der Erfindung erhält man, wenn als Bauteil eine gitterartige Struktur hergestellt wird, die Hinterschneidungen bezüglich der Strahlrichtung des Laserstrahls aufweist. Dabei werden die Schichtbereiche jeweils schon hergestellt, bevor im weiteren Verlauf der Entstehung des Bauteils die Entstehung der Hinterschneidung eine Zugänglichkeit dieser Schichtbereiche für den Laserstrahl verhindern würde. Bei dieser Variante des Verfahrens werden die Vorteile einer Herstellung der Schichtbereiche im selben Prozess der Herstellung des Bauteils besonders deutlich. Es lassen sich fast beliebige dreidimensionale Strukturen erzeugen, bei denen auch in Bereichen, die nach Herstellung des Bauteiles schlecht oder überhaupt nicht zugänglich sind, besondere Schichtbereiche vorgesehen sein sollen. Dies ist von besonderem Vorteil für Bauteile, die in Prozessen als Katalysator Anwendung finden. Der katalytische Wirkungsgrad ist nämlich von der zur Verfügung stehenden Oberfläche abhängig. So wird bei dem erfindungsgemäßen erzeugten Bauteil die katalytische Funktion von den erzeugten Schichtbereichen ausgeübt. Diese können in komplexen dreidimensionalen Gitterstrukturen verteilt sein, wobei diese beispielsweise durch eine erzwungene Durchströmung eines Fluides eine Fluidreaktion hervorrufen.

Erfindungsgemäß ist vorgesehen, dass für die Reaktion, also die Erzeugung der Schichtbereiche, das Reaktivgas Vorstufen des Materials des zu erzeugenden Schichtbereiches enthält. Hierbei kann auf Erfahrungswissen zurückgegriffen werden, welches im Zusammenhang mit dem sogenannten Laser-CVD bereits Stand der Technik ist. Beim Laser-CVD werden Vorstufen des zu erzeugenden Schichtwerkstoffes zu einem Reaktivgas gemischt (d. h. diese Vorstufen sind selbst gasförmig) und auf der Oberfläche durch den Laserstrahl abgeschieden. Dabei sind bestimmte Prozessfenster, beispielsweise hinsichtlich der an der Oberfläche herrschenden Temperatur zu berücksichtigen, die sich in Bezug auf bestimmte Materialkombinationen der allgemeinen Literatur entnehmen lassen. Exemplarisch sind in der folgenden Tabelle einige dieser Reaktivgase zusammen mit den genannten Prozessparametern aufgeführt.

| **Prozesstemperatur** | **Schichtwerkstoff** | **Vorstufen** |
|---|---|---|
| 800°C | SiC | CH₄/H₂/SiH₄ |
| 900°C | W | H₂/WF₆ |
| 950°C | TiN | N₂/H₂/TiCl₄ |
| 1000°C | TiC, TiB₂ oder Al₂O₃ | CH₄/H₂/TiCl₄, BCl₃/H₂/TiCl₄, CO₂/H₂/AlCl₃ |
| 1100°C | Si | H₂/HSiCl₃ |
| 1200°C | Si₃ N₄ | NH₃/H₂/SiCl₃ |

Weitere Einzelheiten der Erfindung werden nachfolgend anhand der Zeichnung beschrieben. Gleiche oder sich entsprechende Zeichnungselemente werden dabei mit den gleichen Bezugszeichen versehen und nur insoweit mehrfach erläutert, wie sich Unterschiede zwischen den einzelnen Figuren ergeben. Es zeigen:
- Figur 1: ein Ausführungsbeispiel des erfindungsgemäßen Prozessraums,
- Figur 2 und 3: Ausschnitte aus Ausführungsbeispielen von erfindungsgemäß hergestellten Bauteilen und
- Figur 4 bis 9: ausgewählte Schritte eines Ausführungsbeispiels des erfindungsgemäßen Verfahrens.

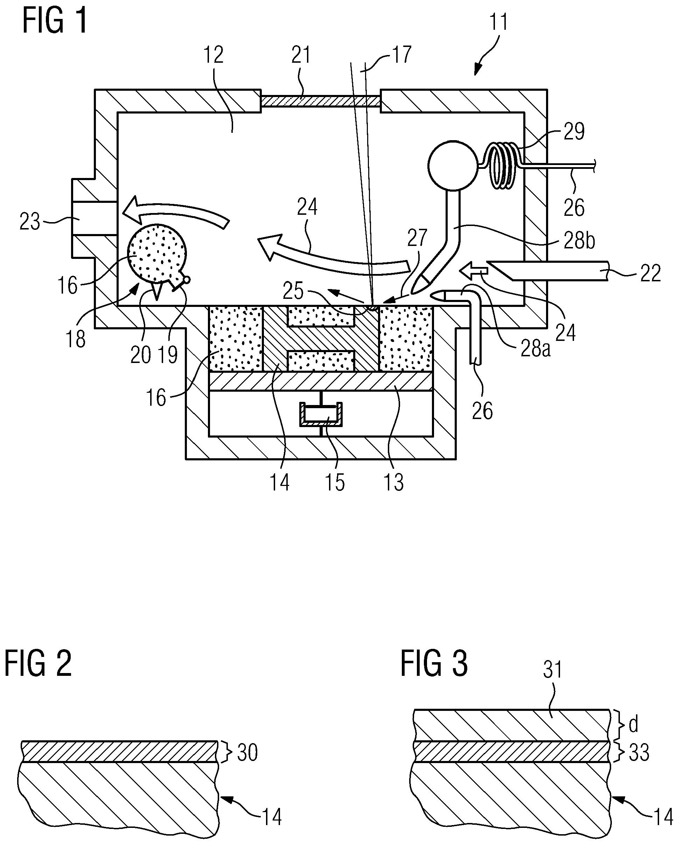

Eine Prozesskammer 11 gemäß Figur 1 weist einen Prozessraum 12 auf, in dem eine Platte 13 für ein zu erzeugendes Bauteil 14 vorgesehen ist. Diese Aufnahmeplatte kann mittels eines Aktuators 15 abgesenkt werden, so dass das Bauteil 14 in einem Vorrat von Pulver 16 des Werkstoffs für das Bauteil hergestellt werden kann, wobei die Aufnahmeplatte 13 jeweils nach der Herstellung einer Lage des Bauteils 14 mittels eines Laserstrahls 17 um die Dicke der Lage abgesenkt wird. Ein beweglicher Vorratsbehälter 18 mit einer Dosierklappe 19 und einer Rakel 20 kann in nicht näher dargestellter Weise über den Vorratsbehälter hinwegbewegt werden, wodurch nach Absenken der Aufnahmeplatte 13 eine weitere Lage Pulver auf der erzeugten Lage des Bauteils 14 aufgebracht werden kann.

Der Laser ist außerhalb der Prozesskammer 11 untergebracht und nicht näher dargestellt. Die Prozesskammer weist ein Fenster 21 auf, durch das der Laserstrahl in die Prozesskammer findet. Weiterhin weist die Prozesskammer einen Einlass 22 und einen Auslass 23 auf, die es ermöglichen, ein Prozessgas entsprechend der angedeuteten breiten Pfeile 24 durch die Prozesskammer zu leiten. Dieses Inertgas überstreicht die Oberfläche des Bauteils 14, verhindert ungewünschte Reaktionen des Schmelzbades 25 des Bauteilwerkstoffes mit gasförmigen Bestandteilen und führt eventuelle Verdampfungsprodukte des Bauteilwerkstoffs durch den Auslass 23 ab.

Zusätzlich ist eine Zuführung 26 vorgesehen, durch die ein Reaktivgas entsprechend der schmalen Pfeile 27 zugeführt werden kann. Das Reaktivgas bewirkt, wie bereits beschrieben, die Ausbildung eines Schichtbereiches (vgl. beispielsweise Figur 2) mit einer von dem Bauteilwerkstoff abweichenden Zusammensetzung. Die Zuführung 26 ist gemäß Figur 1 in zwei Alternativen dargestellt. Sie kann durch eine feststehende Düse 28a gebildet sein, deren Mündung derart angeordnet ist, dass das Reaktivgas in nächster Nähe über das in Erzeugung befindliche Bauteil 14 geleitet wird. Es besteht aber auch die Möglichkeit, eine Düse 28b derart beweglich vorzusehen, dass diese parallel zur Aufnahmefläche bewegbar ist und so in die unmittelbare Nähe des Schmelzbades 25 bewegt werden kann. Hierzu ist ein elastischer Zuführschlauch 29 für das Reaktivgas vorgesehen.

Gemäß Figur 2 ist ein Ausführungsbeispiel des Bauteils 14 dargestellt. Dieses weist als Schichtbereich mit einer von der Bauteilzusammensetzung abweichenden Zusammensetzung eine Oberflächenschicht 30 auf. Diese Oberflächenschicht kann beispielsweise aus Titannitrid bestehen, wobei das Bauteil 14, welches aus Titan besteht, als Werkzeug zum Einsatz kommt.

Gemäß Figur 3 ist der Schichtbereich als Zwischenschicht 33 ausgeführt. Der die Oberfläche 31 bildende Anteil des Bauteilwerkstoffs weist eine Dicke d auf, die gerade den zulässigen abrasiven Gesamtverschleiß des Bauteils entspricht. Ist dieser Bereich des Bauteils abgetragen, kommt die Oberfläche der Zwischenschicht 31 zum Vorschein, was beispielsweise durch einen Farbumschlag der Oberfläche festgestellt werden kann. Hierzu benötigt die Zwischenschicht also eine andere Farbe als das Bauteil.

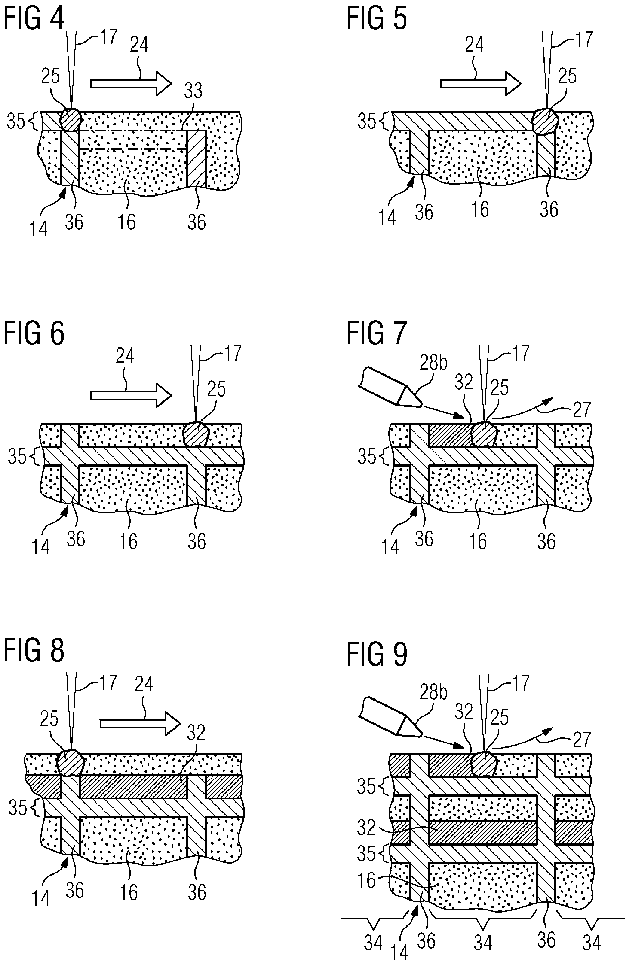

In Figur 4 bis 9 sind verschiedene Entstehungsphasen des Bauteils 14 dargestellt, welches ein dreidimensionales Gitter mit Schichtbereichen 32 bildet, welche katalytische Eigenschaften haben. Wie Figur 9 zu entnehmen ist, weist die dreidimensionale Gitterstruktur aufgrund ihrer räumlichen Ausrichtung in Richtung des Laserstrahls 17 gesehen eine Fülle von Hinterschneidungen 34 auf. Als Hinterschneidung im Zusammenhang mit dieser Erfindung ist gemeint, dass die Zugänglichkeit der hinterschnittenen Bauteilbereiche für den Laserstrahl 17 nach Erzeugung der darüberliegenden Strukturen nicht mehr erreichbar ist.

Die räumliche Struktur des gitterförmigen Bauteils 14 kann man sich so vorstellen, dass im Wechsel Ebenen 35 gebildet werden, die als Substrat für die Schichtbereiche 32 dienen und dann jeweils benachbarte Ebenen verbindende Säulen 36 gefertigt werden, die die Entstehung von Hohlräumen zwischen den Ebenen 35 gewährleisten. Während des Fertigungsverfahrens sind diese Hohlräume noch durch das Pulver 16 ausgefüllt. Die fertig gestellte Struktur kann beispielsweise als Katalysator dienen und wird dann senkrecht zur Zeichenebene von einem Fluid durchströmt.

Figur 4 zeigt eine Phase, in der die Säulen 36 fertig gestellt sind. Es wird gerade eine Lage erzeugt, die in der fertig gestellten Struktur eine neue Ebene 35 bildet. Diese liegt dann auf den fertig gestellten Säulen 36 (und optional auf einem vorher hergestellten Schichtbereich 33).

In Figur 5 ist dargestellt, wie die sich in Ausbildung befindliche Ebene 35 bereits zwei benachbarte Säulen 36 miteinander verbindet.

In Figur 6 wird die erste Lage auf der neu geschaffenen Ebene 35 erzeugt. Zuerst werden noch unter Einfluss des Inertgases 24 Säulenstümpfe 36 für die neuen Säulen 36 in der Lage gefertigt. Wie Figur 7 zu entnehmen ist, wird anschließend mittels der Düse 28b Reaktivgas 27 über die Oberfläche der aktuellen Lage geleitet und mit Hilfe des Lasers auf der Ebene 35 außerhalb der Säulenstümpfe 36 ein Schichtbereich 32 mit katalytischen Eigenschaften hergestellt.

In Figur 8 ist dargestellt, wie in den auf die Schichtbereiche 32 folgenden Lagen jeweils nur die Säulenstümpfe für die neuen Säulen 36 um eine "Etage" aufgestockt werden.

Der Figur 9 kann im Vergleich zur Figur 8 entnommen werden, dass weitere drei Lagen aufgebracht wurden. In der ersten Lage wurden die Säulen 36 noch einmal verlängert (Hier könnte optional auch wieder analog zu der in Figur 1 gezeigten Weise ein Schichtbereich 33 erzeugt werden). In der zweiten Lage wurde eine neue Ebene 35 hergestellt und in der dritten Lage, die aktuell bearbeitet wird, werden die Schritte gemäß Figur 6 und 7 wiederholt. Auf diese Weise kann das dreidimensionale Gitter beliebig erweitert werden, bis die Struktur die gewünschten Abmessungen erreicht hat.

## Patentansprüche

1. Prozesskammer für das selektive Laserschmelzen, welche einen hermetisch gegen die Umgebung abgeschlossenen Prozessraum (12) mit einer Aufnahmeplatte (13) für die Herstellung eines Bauteils (14) aufweist, wobei der Prozessraum einen Einlass (22) und einen Auslass (23) für ein Inertgas oder zum Evakuieren des Prozessraumes aufweist,
**dadurch gekennzeichnet,**
**dass** zusätzlich eine Zuführung (26) für ein Reaktivgas vorgesehen ist, deren Mündung in einer zur Aufnahmeplatte (13) parallelen Ebene bewegbar ist.

2. Verwendung einer Prozesskammer gemäß Anspruch 1 zum Erzeugen eines Bauteils (14) durch selektives Laserschmelzen, bei dem das Bauteil (14) durch einen Laserstrahl (33) lagenweise aus einem Pulver (16) durch Aufschmelzen von Werkstoffpartikeln hergestellt wird, wobei das selektive Laserschmelzen auch dazu eingesetzt wird, um unter Einsatz eines zeitweilig zugeführten, die Vorstufen des Materials des zu erzeugenden Schichtbereiches (32) enthaltenden Reaktivgases auf dem entstehenden Bauteil (14) lokal Schichtbereiche (32) mit einer von dem Werkstoff des Bauteils abweichenden Zusammensetzung zu erzeugen, indem das Reaktivgas unter Berücksichtigung der erforderlichen Prozessparameter in die sich ausbildenden Schichtbereiche (32) eingebaut wird.

3. Verwendung nach Anspruch 2,
**dadurch gekennzeichnet,**
**dass** die Schichtbereiche (32) als letzte Lage oder letzte Lagen auf das Bauteil derart aufgebracht werden, dass diese eine geschlossene Oberflächenschicht (30) auf dem Bauteil (14) ausbilden.

4. Verwendung nach Anspruch 2,
**dadurch gekennzeichnet,**
**dass** nach der Erzeugung der Schichtbereiche (32) auf diesen weitere Lagen des Bauteils (14), bestehend ausschließlich aus dem Werkstoff, abgeschieden werden, wobei die Schichtbereiche eine Zwischenschicht (33) ausbilden.

5. Verwendung nach Anspruch 2,
**dadurch gekennzeichnet,**
**dass** die Schichtbereiche (32) als erste Lage oder erste Lagen auf das Bauteil (14) aufgebracht derart aufgebracht werden, dass diese eine geschlossene Oberflächenschicht (30) auf dem Bauteil (14) ausbilden.

6. Verwendung nach Anspruch 2,
**dadurch gekennzeichnet,**
**dass** als Bauteil (14) eine gitterartige Struktur hergestellt wird, die Hinterschneidungen (34) bezüglich der Strahlrichtung des Laserstrahls (17) aufweist, wobei die Schichtbereiche (32) jeweils hergestellt werden, bevor im weiteren Verlauf der Entstehung des Bauteils (14) die Entstehung der Hinterschneidung (34) eine Zugänglichkeit der Schichtbereiche (32) für den Laserstrahl (17) verhindert.

7. Verwendung nach einem der Ansprüche 2 bis 6,
**dadurch gekennzeichnet,**
**dass** die für die Reaktion der Vorstufen erforderliche Temperatursteuerung durch den Energieeintrag des Laserstrahls (17) gesteuert wird.

## Claims

1. Process chamber for selective laser melting, which has a process space (12) closed off hermetically with respect to the surroundings and having a reception plate (13) for producing a component (14), the process space having an inlet (22) and an outlet (23) for an inert gas or for evacuating the process space,
**characterized**
**in that**, in addition, a feed (26) for a reactive gas is provided, the issue of which feed can be moved in a plane parallel to the reception plate (13).

2. Use of a process chamber according to Claim 1 for producing a component (14) through selective laser melting, in which the component (14) is produced by means of a laser beam (33), in layers, from a powder (16) by material particles being melted on, wherein selective laser melting is also used in order, using a temporarily supplied reactive gas containing the precursors of the material of the layer region (32) to be produced, to produce locally, on the component (14) obtained, layer regions (32) with a composition deviating from that of the material of the component, in that the reactive gas, taking into account the necessary process parameters, is incorporated into the layer regions (32) which are being formed.

3. Use according to Claim 2,
**characterized**
**in that** the layer regions (32) are applied as the last ply or last plies to the component, in such a way that they form a closed surface layer (30) on the component (14).

4. Use according to Claim 2,
**characterized**
**in that**, after the layer regions (32) have been produced, further plies of the component (14), which are composed solely of the material, are deposited on said layer regions, the latter forming an intermediate layer (33).

5. Use according to Claim 2,
**characterized**
**in that** the layer regions (32) are applied as the first ply or first plies to the component (14), in such a way that they form a closed surface layer (30) on the component (14).

6. Use according to Claim 2,
**characterized**
**in that** the component (14) produced is a grid-like structure which has undercuts (34) with respect to the beam direction of the laser beam (17), the layer regions (32) in each case being produced before, as the component (14) continues to arise, the occurrence of the undercut (34) prevents the laser beam (17) from having access to the layer regions (32).

7. Use according to one of Claims 2 to 6,
**characterized**
**in that** the temperature control required for the reaction of the precursors is controlled by the introduction of energy by the laser beam (17).

## Revendications

1. Chambre de processus pour la fusion laser sélective, qui a un espace (12) de processus fermé hermétiquement vis-à-vis de l'atmosphère ambiante et ayant un plateau (13) de réception pour la fabrication d'une pièce (14), l'espace de processus ayant une entrée (22) et une sortie (23) pour un gaz inerte ou pour la mise sous vide de l'espace de processus,
**caractérisée**
**en ce qu'**il est prévu, en outre, un conduit (26) d'amenée d'un gaz réactif, dont l'embouchure peut être déplacée dans un plan parallèle au plateau (13) de réception.

2. Utilisation d'une chambre de processus suivant la revendication 1, pour produire une pièce (14) par fusion laser sélective, dans laquelle on fabrique la pièce (14) par un faisceau (33) laser, couche par couche, à partir d'une poudre (16), par fusion de particules de matériau, la fusion laser sélective étant utilisée également pour produire en utilisant un gaz réactif amené de temps en temps et contenant les précurseurs du matériau de la région (32) de stratification à produire, localement sur la pièce (14) en création, des régions (32) de stratification ayant une composition s'écartant du matériau de la pièce, en incorporant le gaz réactif, en tenant compte des paramètres de processus nécessaires, dans les régions (32) de stratification qui se constituent.

3. Utilisation suivant la revendication 2,
**caractérisée**
**en ce que** l'on dépose sur la pièce les régions (32) de stratification en tant que dernière strate ou dernières strates, de manière à ce que celles-ci constituent sur la pièce (14) une couche (30) de surface fermée.

4. Utilisation suivant la revendication 2,
**caractérisée**
**en ce que**, après la production des régions (32) de stratification, on dépose sur celles-ci d'autres strates de la pièce (14), constituées exclusivement du matériau, les régions de couche constituant une couche (33) intermédiaire.

5. Utilisation suivant la revendication 2,
**caractérisée**
**en ce que** l'on dépose les régions (32) de stratification déposées comme première strate ou premières strates sur la pièce (14), de manière à ce que celles-ci constituent, sur la pièce (14), une couche (30) de surface fermée.

6. Utilisation suivant la revendication 2,
**caractérisée**
**en ce que** l'on fabrique comme pièce (14) une structure de type à réseau, qui a des contre-dépouilles (34) rapportées à la direction de rayonnement du faisceau (17) laser, les régions (32) de stratification étant produites avant que, dans le cours ultérieur de la création de la pièce (14), la création de la contre-dépouille (34) empêche un accès du faisceau (17) laser aux régions (32) de stratification.

7. Utilisation suivant l'une des revendications 2 à 6,
**caractérisée**
**en ce que** l'on règle la température nécessaire à la réaction des précurseurs par l'apport d'énergie du faisceau (17) laser.
